# EUROPEAN PATENT SPECIFICATION

(11) **EP 1 935 238 B1**
(45) Date of publication and mention of the grant of the patent: **13.10.2010**
(21) Application number: 08154449.6
(22) Date of filing: 25.04.2006
(51) Int. Cl.: A01K 5/00, A01F 29/00

(54) **Apparatus and method for separating and mixing feed for live-stock**
Vorrichtung und Verfahren zum Trennen und Mischen von Viehfutter
Appareil et procédé pour séparer et mélanger de l'aliment pour bétail

(30) Priority: 19.05.2005 NL 1029075
(43) Date of publication of application: 25.06.2008
(62) Divisional of application: 06113032.4
(73) Proprietor: Trioliet Mullos B.V., 7575 BE Oldenzaal (NL)
(72) Inventor: Liet, Cornelis Hendricus, 7581PJ, Losser (NL); Van der Plas, Nicolaas, 7576WX, Oldenzaal (NL)
(74) Representative: Zonneveld, Hendrik Jan

(56) References cited:
- DE-A- 4 027 527
- DE-A- 19 938 090
- NL-C- 1 022 678
- US-A- 3 830 438
- US-A- 4 258 886
- US-A- 5 333 799

## Description

The invention relates to an apparatus for separating and mixing feed for livestock according to the preamble of claim 1, as well as to a method for separating and mixing feed for livestock.

Such an apparatus and method are described in the present Applicant's Dutch patent application No. 1026841 and in US-A-3830438.

The object of the invention is to provide an improved apparatus and method of this kind.

According to the invention, the apparatus is to that end characterised as set forth in claim 1.

Preferably, the cutting unit is arranged for following a cutting path such that the end side facing towards the discharge side of the remaining part of the bale is rearwardly inclined with respect to the vertical. More in particular, the cutting unit is arranged for separating a slice of feed according to a cutting path such that the remaining part of the bale is narrower at the upper side than at the bottom side.

According to the method, one or more bales of feed is (are) placed on one or more conveyor alleys, the bale(s) placed on the conveyor alley(s) are conveyed from an inlet side to a discharge side, and feed is separated from a bale that has been conveyed to the discharge side, which separated feed is mixed into a feed mixture in a mixing bin. A slice of feed is separated from the end facing towards the discharge side of the bale that is present at the discharge side, and that preferably in such a manner that the end side of the remaining part of the bale facing towards the discharge side is rearwardly inclined with respect to the vertical. According to the invention, this method is characterised as set forth in claim 21.

Furthermore, an apparatus and a method are obtained in which a correct metering of the feed being supplied to the mixing bin can be realised in that the separating of the slice of feed by the cutting unit can take place gradually and can be stopped at any desired moment. In the preferred variant, in which cutting takes place according to the aforesaid cutting path, a very precise metering is ensured in that the remaining part of the bale from which the slice has been separated remains stable and no undesirable chunks of feed will fall from the conveyor alley and be supplied to the mixing bin.

The invention will now be explained in more detail with reference to the drawing, in which a few embodiments of the apparatus according to the invention are schematically shown.

Fig. 1 is a schematic plan view of a first embodiment of the apparatus according to the invention.

Fig. 2 is a schematic plan view of a second embodiment of the apparatus according to the invention.

Fig. 3 is a partial cross-sectional view of a conveyor alley of the apparatus according to the invention.

Fig. 4 is a schematic side view of the discharge side of the conveyor alleys of the apparatus according to Fig. 1.

Fig. 5 is a larger-scale view of a part of the side view of Fig. 4.

Fig. 6 is a schematic plan view of the discharge side of the apparatus of Fig. 1.

Fig. 7 is a side view corresponding to Fig. 4 of the discharge side of a third embodiment of the apparatus according to the invention.

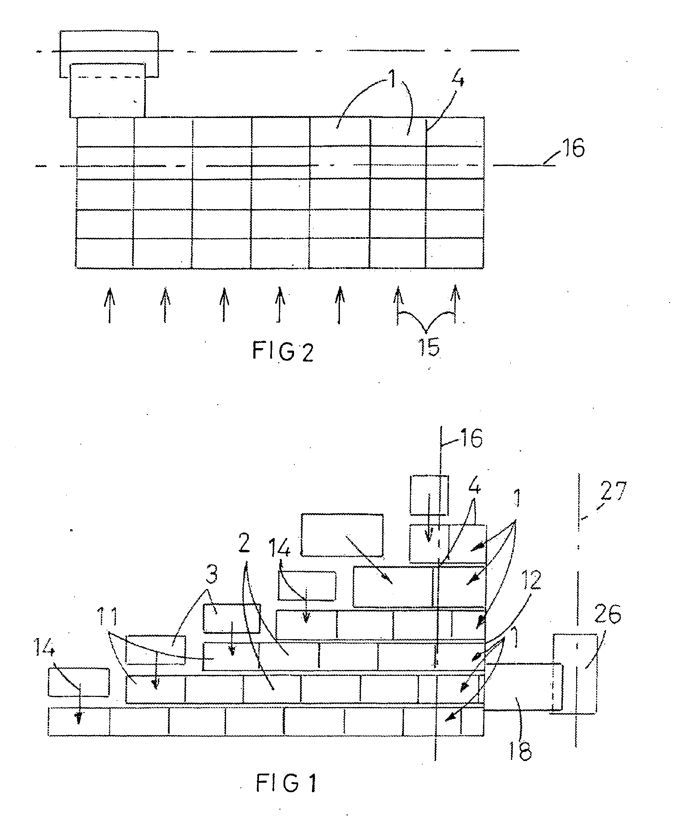

In Fig. 1 a schematic plan view is shown of an apparatus for separating and mixing feed for livestock, which apparatus comprises six units 1 arranged in side-by-side relationship for processing feed. A larger or a smaller number of units, even a single unit, may be used in other embodiments. Each unit 1 comprises a conveyor alley or conveyor passageway 2 for receiving one or more bales of feed 3, possibly with loose fodder between said bales. The feed placed on the various conveyor alleys 2 may consist of bales of maize and grass of different qualities, bales of stray and bales of alfalfa, for example.

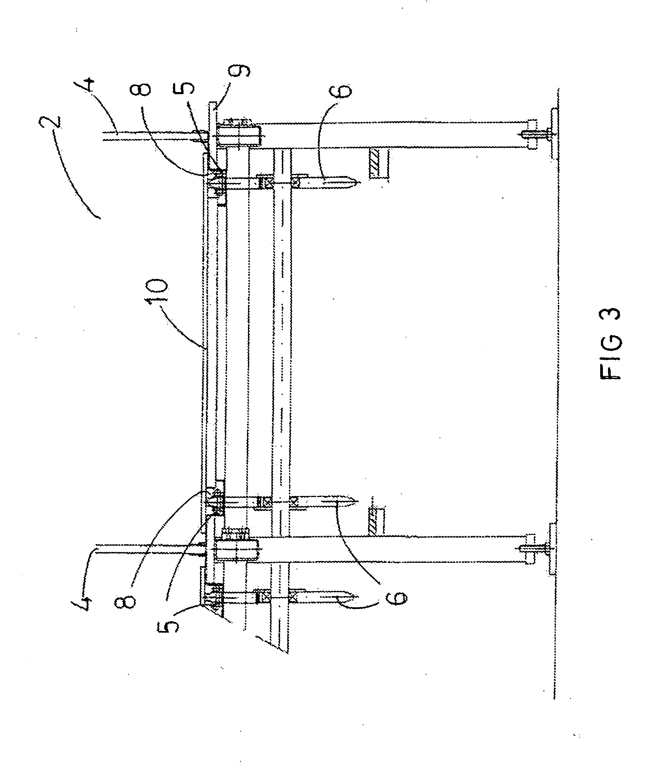

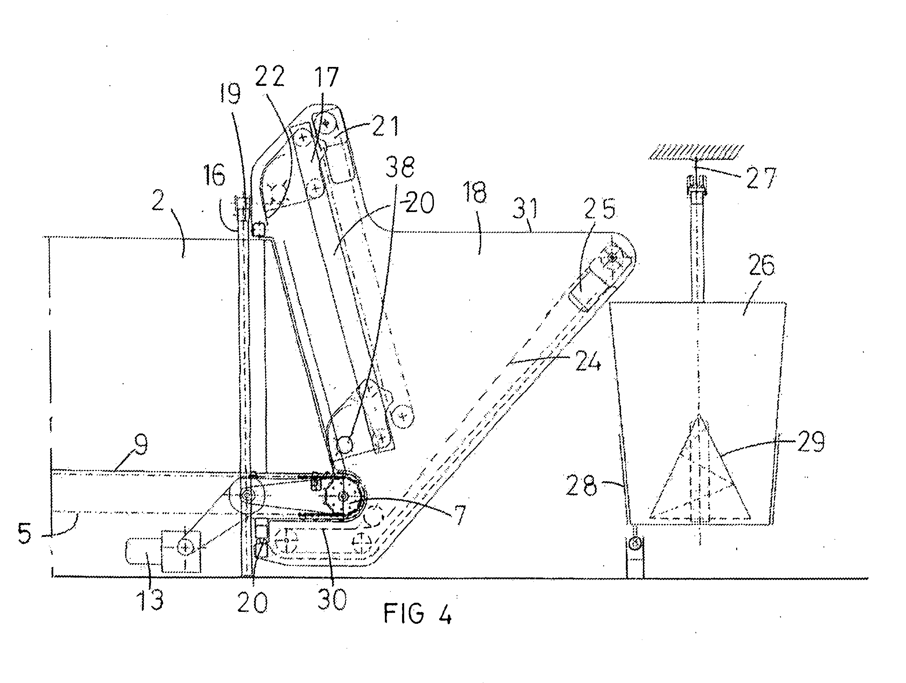

Fig. 3 is a partial cross-sectional view of a conveyor alley 2, which clearly shows that the conveyor alleys 2 are bounded by sideboards 4 on either side. Fig. 3 furthermore shows that each conveyor alley 2 comprises conveying means, in the form of endless conveyor chains 5 in the illustrated embodiment, which extend between return sprockets 6 and 7 as shown in Figs. 3 and 4. It will be apparent that conveying means other than conveyor chains may be used, for example a block slide, hydraulic conveying means and the like.

The upper part of the conveyor chains 5 is guided in troughs 8, which extend in the longitudinal direction of a bottom 9 of the associated conveyor alley 2. Carriers 10 extending transversely to the conveying direction are provided on the conveyor chains 5. The carriers 10 are supported on the bottom 9 and are capable of moving the bales that have been placed on the conveyor alley 2 at an inlet side 11 towards a discharge side 12 when the conveyor chains 5 are driven. The drive unit for the conveyor chains 5 is schematically indicated at 13 in Fig. 4.

In this way the upper part of the conveyor chains 5 lies protected in the trough 8 of the bottom 9, so that the chains 5 cannot be damaged by the teeth of the fork that places the bales 3 on the conveyor alleys 2 at the inlet side 11.

In Fig. 1 the direction in which the bales 3 are fed to the conveyor alleys 2 is indicated by arrows 14. As the figure shows, said feeding direction extends transversely to the conveying direction of the bales on the conveyor alleys 2. The sideboards 4 are strengthened at the inlet side 11, functioning as bumper boards, so that the bales can be pushed against said bumper boards by means of a tractor so as to ensure that the bales are correctly placed on the bottom 9, with their longitudinal axis extending in the conveying direction of the conveyor. This prevents the bales 3 getting wedged between the sideboards 4.

Although the bales are placed on the bottom 9 with their longitudinal axis in line with the conveying direction of the conveyor alleys 2 in Fig. 1, it is also possible, if desired, to place the bales 3 on the bottom 9 with their longitudinal axis extending transversely to the conveying direction of the conveyor alleys 2.

In Fig. 2 such an embodiment is shown in schematic plan view, in which the feeding direction likewise extends in line with the conveying direction of the conveyor chains 5, as indicated by an arrow 15.

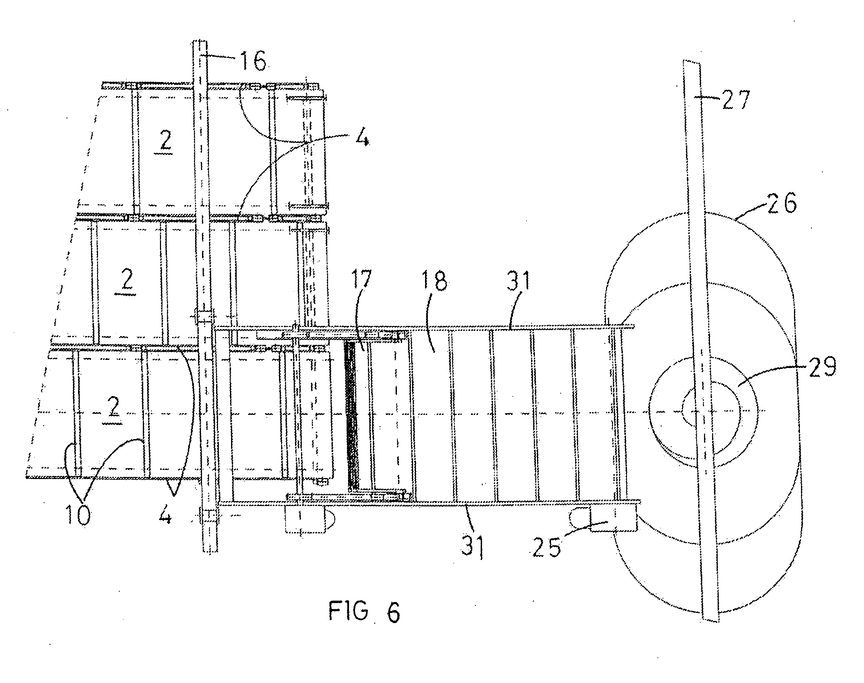

Fig. 4 is a schematic side view of the discharge side of the conveyor alleys of the apparatus according to Fig. 1, showing a frame 16 disposed at the discharge side 12 of the conveyor alley 2. Said frame 16 extends over the discharge sides 12 of all the side-by-side conveyor alleys 2 and carries a cutting unit 17, which forms part of a discharge unit 18 in this embodiment. The discharge unit 18 is guided on a transverse guide 19 at the upper side of the frame 16 and a transverse guide 20 at the bottom side of the frame 16. In this way the cutting unit 17 is movable transversely to the conveyor alleys 2, with a drive unit (not shown) moving the cutting unit 17 to operating positions in which the cutting unit 17 and the discharge unit 18 are in line with a conveyor alley 2, as is shown in plan view in Fig. 6.

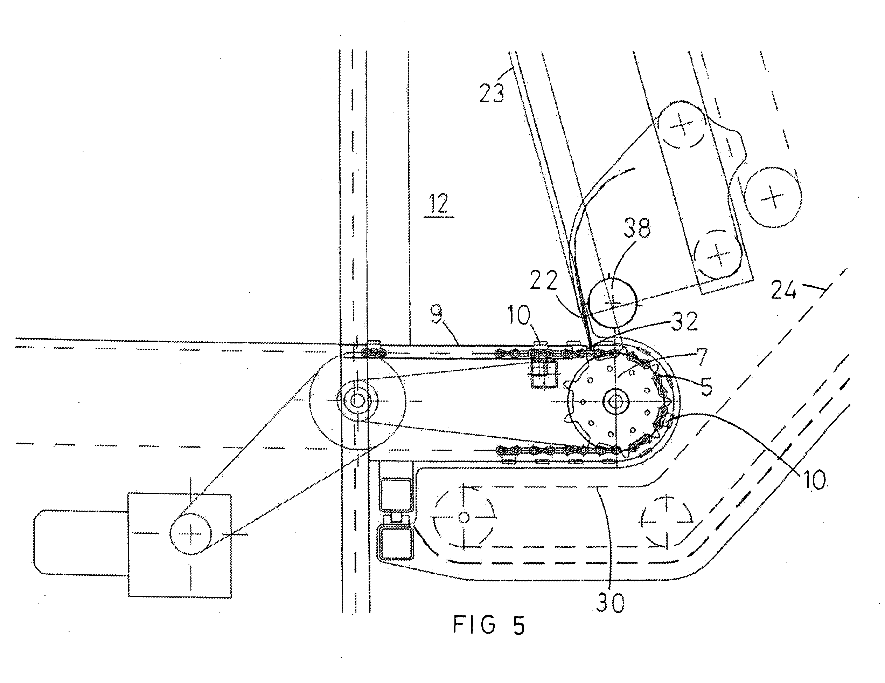

The cutting unit 17 comprises a frame 20, along which the cutting unit 17 can be moved up and down by a drive unit 21 (schematically indicated). The frame 20 is disposed at an angle with respect to the vertical, so that the cutting unit 17 will follow an inclined cutting path upon moving downwards, with a cutting knife 22, which is shown in more detail in Fig. 5, forming an inclined cut surface 23. It is noted that the cutting path does not have to be a straight line, but that it may also follow a curved line, so that the cut surface will not be flat but curved. According to an advantageous embodiment, a cutting knife comprising two reciprocable blades may be used. Furthermore, the cutting unit 17 may also be provided with cutting means other than the cutting knife 22. The term cutting unit as used in the description and the claims is to be understood to mean any unit by means of which a slice of feed can be separated from the end of the bale that faces towards the discharge side.

The cutting unit 17 cuts a slice of feed from the end facing towards the discharge side of the bale 3 that is present at the discharge side, forming the inclined cut surface, which may or may not be curved, so that the end side of the remaining part of the bale 3 is rearwardly inclined with respect to the vertical. Moreover, said remaining part of the bale 3 is shorter at the upper side than at the bottom side in this case. This achieves that no chunks of feed will come off the remaining part of the bale and fall into the discharge unit 18, and that the remaining part of the bale 3 will remain in a stable position on the bottom 9 of the conveyor alley 2, also if the mayor part has already been cut from the bale. This means that the cutting unit 17 can precisely cut a desired amount of feed from the bale 3 present at the discharge side 12, which amount can be measured by weighing means (not shown). Once the desired amount of feed has been cut from the bale 3, the cutting process is stopped.

The thickness of the slice of feed that is cut from the bale 3 by the cutting unit 17 can be selected by varying the distance over which the bale is moved to the discharge side by the conveyor chains 5. According to one embodiment (not shown) of the apparatus described herein, the thickness of the slice to be separated can also be determined in that the cutting unit 17 is movable in the longitudinal direction of the conveyor alleys 2.

In the embodiment that is shown in Figs. 1-6, the discharge unit 18 comprises a discharge conveyor belt 24 that can be driven by a drive unit 25 (schematically indicated). The discharge conveyor belt 24 discharges the feed that has been cut from the bale 3 to a mixing bin 26, which is suspended from a rail 27 in this embodiment. The mixing bin 26 is provided with flaps 28 (schematically indicated) on either side, via which the feed mixture from the mixing bin 26 can be delivered to the livestock. Disposed inside the mixing bin 26 is a mixing element 29, for example in the form of a vertical mixing screw. It is also possible to fit the mixing bin with more than one vertical mixing screw. Furthermore, several guide elements that help to achieve a correct homogeneous mixture of the feed may be provided in the mixing bin 26 as part of the mixing elements 29. The mixing element 29 ensures that a correct homogeneous composition of the feed mixture is obtained, which mixture may consist of portions from various bales 3 from the various conveyor alleys 2 and any other feed components. When the desired amount of feed from bales from the various conveyor alleys 2 is contained in the mixing bin 26, the feed can be mixed to obtain a feed mixture. The mixing bin 26 is moved to the livestock shed via the rail 27. In the shed, the feed mixture is delivered to the livestock in a metered manner via the flaps 28.

The mixing bin 26 is provided with a driving motor for moving the mixing bin along the rail 27, with the power supply to the driving motor possibly taking place via the rail 27 or by means of a battery. Furthermore it is possible for the mixing bin 26 to move the discharge unit 18 to the conveyor alleys 2 from which feed is to be received. The mixing bin 26 may to that end be coupled to the discharge unit 18 at the location of the conveyor alleys 2.

As already noted above, the amount of feed can be determined by weighing means (not shown). Said weighing means can weigh the feed that falls into the discharge unit 18, for example. This has the advantage that the discharge unit 18 can receive feed components in a desired composition thereof before the mixing bin 26 is present. Alternatively, the weighing means can determine the amount of feed in the mixing bin 26. According to another possibility, the weighing means can weigh both the feed in the discharge unit 18 and the feed in the mixing bin 26. To that end weighing sensors may be provided in the supporting structure of the conveyor belt 24 and in the suspension of the mixing bin 26 from the rail 27. Since the cutting unit 17 cuts feed from a bale 3 according to the cut surface 23 as described above, the cutting process can be stopped at the exact moment that a desired amount of separated feed is obtained. The remaining part of the bale 3 remains stable, so that no chunks of feed will undesirably fall into the discharge unit 18.

Once a sufficient amount of feed has been cut from a bale of feed on a specific conveyor alley 2, the cutting unit 17 moves upwards to the position of rest that is shown in Fig. 4. Subsequently the conveyor chains 5 are moved some distance from the discharge side 12 towards the inlet side, so that the conveyor alley 2 will be entirely clear at the discharge side. The cutting unit 17 and the discharge unit 18 can then be moved to a next conveyor alley 2 for a different type of feed.

The apparatus as described herein may comprise a suitable control unit by means of which the feeding process can be controlled fully automatically.

As will be apparent from Fig. 4 and 5, the discharge conveyor belt 24 comprises a portion 30 that extends under the discharge side 12 of the conveyor alleys 2. Furthermore, the discharge unit 18 comprises sideboards 31. The spacing between the sideboards 31 and the width of the discharge conveyor belts 24 are at least equal to the spacing between the boards 4 that bound the widest conveyor alley 2. This construction, which is closed in transverse direction, of the discharge unit 18 and the portion 30 of the discharge conveyor belt 24 that extends under the discharge sides 12 of the conveyor alleys 2 ensures that all the feed from each conveyor alley 2 will be received in the discharge unit 18 and be delivered to the mixing bin 26.

As Fig. 5 shows, a transverse slot 32 is provided in the bottom 9 at the location of the return sprocket 7, into which slot the cutting knife 22 of the cutting unit 17 may extend, which ensures that the cutting unit 17 will correctly separate the slice of feed from the bale 3 that is present at the discharge side 12.

One of the boards 4 that bound each conveyor alley 2 at the discharge side 12 may be movable in a direction transverse to the conveying direction, for example be pivotable about a vertical axis, in which case a driving element, e.g. a cylinder-piston assembly, may push the movable board 4 against the bale that is present at the discharge side 12. This causes the bale to be clamped between the two boards 4, so that the bale 3 is held while being cut by the cutting unit 17. This helps to obtain a correct cutting result and prevents the bale from being pulled apart and chunks of feed unintentionally falling into the discharge unit 18.

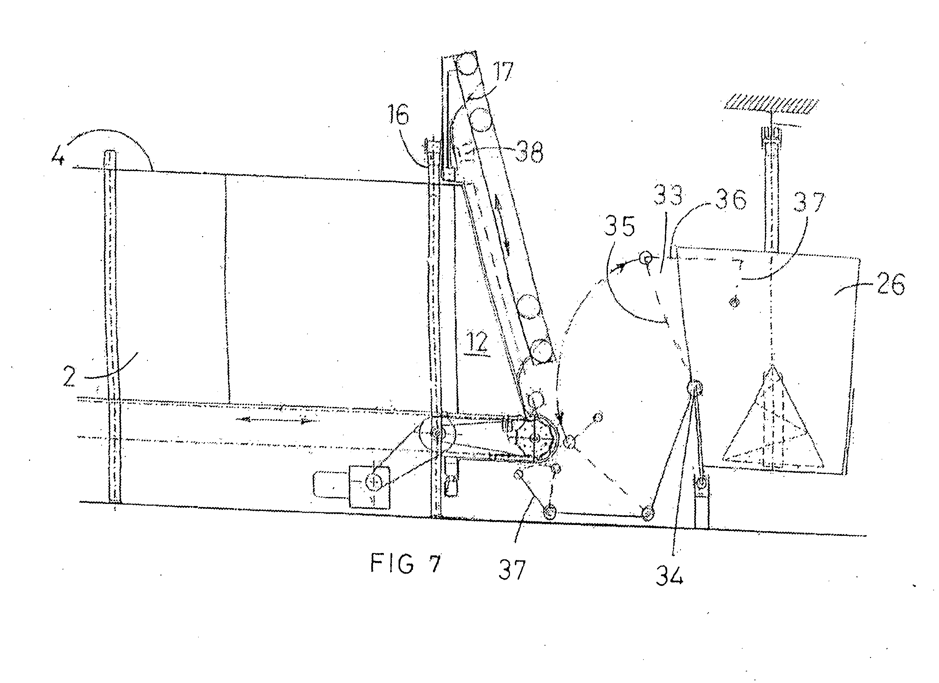

Fig. 7 shows an alternative embodiment of the apparatus not according to the invention, in which the cutting unit 17 does not comprise a discharge unit 18. In this embodiment the mixing bin 26 comprises a loading bucket 33 (schematically indicated). Said loading bucket 33 is pivotally connected to the mixing bin 26 at 34 and comprises three pivotally interconnected parts 35, 36 and 37, which parts can be moved from the position that is illustrated in a broken line in figure 7 to the loading position that is illustrated in a full line for loading the mixing bin 26. In the loading position as shown, the loading bucket part 37 is positioned under the discharge side 12 of the conveyor alley 2 opposite which the mixing bin 26 is positioned. The loading bucket parts 34-36 are provided with side walls that can slide over each other.

According to another embodiment of the invention, a non-movable discharge unit may be used with the cutting unit 17 that is shown in Fig. 7, which discharge unit comprises a first conveyor belt extending transversely to the conveyor alleys 2, partially under the discharge sides 12 thereof, which conveyor belt supplies the separated feed to a second conveyor belt. Said second conveyor belt slopes upwards and is capable of depositing the feed in the mixing bin 26. In this embodiment the weighing means comprise sensors accommodated in the supporting structure of the conveyor belt(s).

It is noted that the cutting unit 17 is provided with discharge means for discharging the separated slice of feed from the cutting unit. In figures 4 and 7 a roller 38 is shown as an example of said discharge means, which roller is rotatably mounted - drivably, if desired - in the cutting unit 17. For a further explanation of possible embodiments of such discharge means reference is made to Applicant's Dutch patent application No. 1028732.

According to the invention it is also possible to place the conveyor alleys 2 in an inclined position, at least the part thereof that is located at the discharge side, so that the discharge side 12 will be positioned higher than the inlet side 11. In that case the cutting unit 17 can follow a cutting path substantially perpendicular to the bottom of the conveyor alley, for example, so that the end side of the remaining part of the bale 3 that faces towards the discharge side 12 is rearwardly inclined with respect to the vertical. In this way material of the bale is prevented from unintentionally falling into the discharge unit 18 or the mixing bin 26, and the remaining part of the bale will remain in a stable position on the bottom of the conveyor alley 2. Also in this case the cutting path may be curved, and the cutting path may also extend at an angle to the bottom of the conveyor.

The invention is not restricted to the embodiments as described above, which can be varied in several ways within the scope of the claims.

## Claims

1. An apparatus for separating and mixing feed for livestock, comprising at least one unit (1) for processing feed, which unit comprises a conveyor alley (2) for receiving one or more bales (3) of feed, which conveyor alley comprises conveying means (5) for conveying the received bale(s) of feed from an inlet side to a discharge side, and separating means for separating feed from a bale that has been conveyed to the discharge side, said apparatus furthermore comprising a mixing bin (26) for mixing feed components into a feed mixture and discharge unit (18) for supplying separated feed to the mixing bin, wherein the separating element is configured as a cutting unit arranged for separating a slice of feed from the end facing towards the discharge side of the bale that is present at the discharge side **characterized in that** the discharge unit (18) for supplying separated feed to the mixing bin comprise a conveying element (24) for conveying feed to the mixing bin, said conveying element comprising a portion (30) that extends under the discharge side(s) (12) of the conveyor alley(s).

2. Apparatus according to claim 1 wherein the conveying element (24) and/or the mixing bin (26) is (are) provided with weighing means for weighing the amount of feed in the discharge unit (18) and/or the mixing bin.

3. An apparatus according to claim 1 or 2, wherein the cutting unit (17) is arranged for following a cutting path such that the end side facing towards the discharge side of the remaining part of the bale (3) is rearwardly inclined with respect to the vertical.

4. An apparatus according to claim 1, 2 or 3, wherein the cutting unit (17) is arranged for separating a slice of feed according to a cutting path such that the remaining part of the bale (3) is narrower at the upper side than at the bottom side.

5. An apparatus according to any one of the preceding claims, comprising two or more units (1) for processing feed, wherein the conveyor alleys (2) of the various units are arranged side by side, and wherein the cutting unit (17) is movable transversely to the conveyor alleys to operating positions that are in line with the respective conveyor alleys.

6. An apparatus according to any one of the preceding claims, wherein the cutting unit (17) is movable in the longitudinal direction of the conveyor alleys.

7. An apparatus according to any one of the preceding claims, wherein the cutting unit (17) is provided with discharge means (38) for discharging separated feed from the cutting unit.

8. An apparatus according to any one of the preceding claims, wherein the cutting unit (17) comprises a frame (20) along which the cutting unit can move up and down according to the inclined cutting line.

9. An apparatus according to any one of the preceding claims, wherein the cutting unit (17) forms part of the discharge unit (18) and wherein a transverse guide (19) is provided at the discharge side of all the conveyor alleys (2), from which the discharge unit (18) is suspended in such a manner as to be movable transversely to the conveyor alleys.

10. An apparatus according to claim 9, wherein the mixing bin (26) is provided with a driving element and the mixing bin can be coupled to the discharge unit (18) for moving the discharge unit with respect to the conveyor alleys.

11. An apparatus according to claim 9 or 10, wherein the conveying element (24) forms part of the discharge unit.

12. An apparatus according to claim 9, wherein the mixing bin is provided with a loading bucket (33) for receiving feed and supplying said feed to the mixing bin.

13. An apparatus according to any one of the preceding claims, wherein the/each conveyor alley comprises a bottom (9), at least one endless conveyor chain (5), which is guided in a trough (8) formed in the bottom between return sprockets (6, 7) disposed at the inlet side and at the discharge side, respectively, wherein carriers (10) extending transversely to the conveying direction are connected to the conveyor chain(s), which carriers are guided on the bottom.

14. An apparatus according to claim 13, wherein a transverse slot (32) is formed in the bottom of the conveyor, near the discharge side, into which slot the knife (22) of the cutting unit can extend.

15. An apparatus according to any one of the claims 9-14, wherein the conveyor alleys (2) are bounded by boards (4) on either side, and wherein the discharge unit (18) is provided with sideboards (31), the spacing between the sideboards being at least equal to the spacing between the boards of the widest conveyor.

16. An apparatus according to claim 15, wherein a board (4) that is movable transversely to the conveying direction for clamping a bale of feed between the boards that bound the conveyor alley (2) in question is provided at the discharge side of one or more conveyor alleys.

17. An apparatus according to any one of the preceding claims, wherein the feeding direction at the inlet side of the/each conveyor alley (2) extends transversely to the conveying direction.

18. An apparatus according to any one of the claims 1-16, wherein the feeding direction at the inlet side of the/each conveyor alley (2) corresponds to the conveying direction.

19. An apparatus according to any one of the preceding claims, wherein at least a part of the/each conveyor alley (2) is inclined, with the discharge side being positioned higher than the inlet, side.

20. An apparatus according to any one of the preceding claims, wherein the cutting unit (17) comprises a cutting knife comprising two reciprocable blades.

21. A method for separating and mixing feed for livestock, wherein one or more bales (3) of feed is (are) placed on one or more conveyor alleys (2), the bale(s) placed on the conveyor alley(s) are conveyed from an inlet, side to a discharge side, and feed is separated from a bale that has been conveyed to the discharge side, which separated feed is mixed into a feed mixture in a mixing bin (26), wherein a slice of feed is separated from the end facing towards the discharge side of the bale that is present at the discharge side **characterized in that** the separated feed is supplied to the mixing bin (26) by means (18) comprising a conveying element (24) for conveying feed to the mixing bin, said conveying element comprising a portion (30) that extends under the discharge side(s)(12) of the conveyor alley(s).

22. A method according to claim. 21, wherein a slice of feed is separated according to a cutting path such that the remaining part of the bale (3) facing towards the discharge side (12) is rearwardly inclined with respect to the vertical.

23. A method according to claim 21 or 22, wherein a slice of feed is separated according to a cutting path such that the remaining part of the bale (3) facing towards the discharge side (12) is narrower at the upper side than at the bottom side.

24. A method according to claim 21, 22 or 23, wherein the part of the bale (3) that remains after the slice of feed has been separated therefrom is moved from the discharge side towards the inlet side.

## Patentansprüche

1. Eine Vorrichtung zum Abtrennen und Mischen von Viehfutter, aufweisend mindestens eine Einheit (1) zum Bearbeiten von Futter, wobei die Einheit eine Förderbahn (2) zum Aufnehmen eines oder mehrerer Futterballen (3) aufweist, wobei die Förderbahn Fördermittel (5) zum Befördern des aufgenommenen Futterballens/der aufgenommenen Futterballen von einer Einlassseite zu einer Entladeseite aufweist, und Trennmittel zum Abtrennen von Futter von einem Ballen, der zu der Entladeseite befördert wurde, wobei die Vorrichtung ferner einen Mischbehälter (26) zum Mischen von Futterkomponenten zu einer Futtermischung und eine Entlade-Einheit (18) zum Zuführen von abgetrenntem Futter zu dem Mischbehälter aufweist, wobei das Trennelement als eine Schneide-Einheit eingerichtet ist, die zum Abtrennen eines Schnitts Futter von demjenigen Ende des an der Entladeseite befindlichen Ballens, das der Entladeseite zugewandt ist, angeordnet ist, **dadurch gekennzeichnet, dass** die Entlade-Einheit (18) zum Zuführen von abgetrenntem Futter zu dem Mischbehälter ein Förderelement (24) zum Befördern von Futter zu dem Mischbehälter aufweist, wobei das Förderelement einen Abschnitt (30) aufweist, der sich unter der/den Entladeseite/n (12) der Förderbahn/en erstreckt.

2. Vorrichtung gemäß Anspruch 1, wobei das Förderelement (24) und/oder der Mischbehälter (26) mit Wiegemitteln zum Wiegen der Menge von Futter in der Entlade-Einheit (18) und/oder dem Mischbehälter versehen ist/sind.

3. Eine Vorrichtung gemäß Anspruch 1 oder 2, wobei die Schneide-Einheit (17) so angeordnet ist, dass sie einem Schneide-Pfad folgt, so dass die Endseite des verbleibenden Teils des Ballens (3), die der Entladeseite zugewandt ist, relativ zu der Senkrechten nach hinten geneigt ist.

4. Eine Vorrichtung gemäß Anspruch 1, 2 oder 3, wobei die Schneide-Einheit (17) zum Abtrennen eines Schnitts Futter gemäß einem Schneide-Pfad angeordnet ist, so dass der verbleibende Teil des Ballens (3) an der oberen Seite schmaler als an der unteren Seite ist.

5. Eine Vorrichtung gemäß einem der vorhergehenden Ansprüche, zwei oder mehr Einheiten (1) zum Bearbeiten von Futter aufweisend, wobei die Förderbahnen (2) der verschiedenen Einheiten nebeneinander angeordnet sind und wobei die Schneide-Einheit (17) quer zu den Förderbahnen in Betriebspositionen bewegbar ist, die mit den jeweiligen Förderbahnen auf einer Linie liegen.

6. Eine Vorrichtung gemäß einem der vorhergehenden Ansprüche, wobei die Schneide-Einheit (17) in der Längsrichtung der Förderbahnen bewegbar ist.

7. Eine Vorrichtung gemäß einem der vorhergehenden Ansprüche, wobei die Schneide-Einheit (17) mit Entlademitteln (38) zum Entladen von abgetrenntem Futter aus der Schneide-Einheit versehen ist.

8. Eine Vorrichtung gemäß einem der vorhergehenden Ansprüche, wobei die Schneide-Einheit (17) einen Rahmen (20) aufweist, entlang dem die Schneide-Einheit sich gemäß der schrägen Schnittlinie nach oben und nach unten bewegen kann.

9. Eine Vorrichtung gemäß einem der vorhergehenden Ansprüche, wobei die Schneide-Einheit (17) Teil der Entlade-Einheit (18) ist und wobei eine Querführung (19) an der Entladeseite aller Förderbahnen (2) vorgesehen ist, an der die Entlade-Einheit (18) derart aufgehängt ist, dass sie quer zu den Förderbahnen bewegbar ist.

10. Eine Vorrichtung gemäß Anspruch 9, wobei der Mischbehälter (26) mit einem Antriebselement versehen ist und der Mischbehälter zum Bewegen der Entlade-Einheit relativ zu den Förderbahnen mit der Entlade-Einheit (18) gekuppelt werden kann.

11. Eine Vorrichtung gemäß Anspruch 9 oder 10, wobei das Förderelement (24) Teil der Entlade-Einheit ist.

12. Eine Vorrichtung gemäß Anspruch 9, wobei der Mischbehälter mit einer Ladeschaufel (33) zum Aufnehmen von Futter und zum Zuführen des Futters zu dem Mischbehälter versehen ist.

13. Eine Vorrichtung gemäß einem der vorhergehenden Ansprüche, wobei die/jede Förderbahn aufweist: einen Boden (9), mindestens eine Endlosförderkette (5), die in einen Trog (8) geführt ist, der in dem Boden zwischen Umlenkzahnrädern (6, 7) ausgebildet ist, die an der Einlassseite beziehungsweise an der Entladeseite angeordnet sind, wobei Träger (10), die sich quer zu der Beförderungsrichtung erstrecken, an die Förderkette(n) angeschlossen sind, wobei die Träger am Boden geführt sind.

14. Eine Vorrichtung gemäß Anspruch 13, wobei ein Querschlitz (32) in dem Boden der Fördereinrichtung nahe bei der Entladeseite ausgebildet ist, wobei sich das Messer (22) der Schneide-Einheit in diesen Schlitz hineinerstrecken kann.

15. Eine Vorrichtung gemäß einem der Ansprüche 9 bis 14, wobei die Förderbahnen an beiden Seiten durch Tafeln (4) begrenzt sind, und wobei die Entlade-Einheit (18) mit Seitenbrettern (31) versehen ist, wobei der Abstand zwischen den Seitenbrettern (31) mindestens gleich dem Abstand zwischen den Tafeln der breitesten Förderbahn ist.

16. Eine Vorrichtung gemäß Anspruch 15, wobei eine Tafel (4), die zum Einklemmen eines Futterballens zwischen den die betreffende Förderbahn (2) begrenzenden Tafeln quer zu der Beförderungsrichtung bewegbar ist, an der Entladeseite von einer oder mehreren Förderbahnen vorgesehen ist.

17. Eine Vorrichtung gemäß einem der vorhergehenden Ansprüche, wobei sich die Zuführrichtung an der Einlassseite der/jeder Förderbahn (2) quer zu der Beförderungsrichtung erstreckt.

18. Eine Vorrichtung gemäß einem der Ansprüche 1 bis 16, wobei die Zuführrichtung an der Einlassseite der/jeder Förderbahn (2) der Beförderungsrichtung entspricht.

19. Eine Vorrichtung gemäß einem der vorhergehenden Ansprüche, wobei zumindest ein Teil der/jeder Förderbahn (2) geneigt ist, wobei die Entladeseite höher als die Einlassseite positioniert ist.

20. Eine Vorrichtung gemäß einem der vorhergehenden Ansprüche, wobei die Schneide-Einheit (17) ein Schneidemesser aufweist, das zwei hin- und herbewegbare Klingen aufweist.

21. Ein Verfahren zum Abtrennen und Mischen von Viehfutter, wobei ein oder mehr Futterballen (3) auf einer oder mehr Förderbahnen (2) platziert wird/ werden, der/die auf der/den Förderbahn./en platzierte/n Ballen von einer Einlassseite zu einer Entladeseite befördert wird/werden, und Futter von einem Ballen abgetrennt wird, der zu der Entladeseite befördert wurde, wobei das abgetrennte Futter in einem Futterbehälter (26) zu einer Futtermischung gemischt wird, wobei ein Schnitt Futter von dem Ende des an der Entladeseite befindlichen Ballens abgetrennt wird, das der Entladeseite zugewandt ist, **dadurch gekennzeichnet, dass** das abgetrennte Futter dem Mischbehälter (26) durch Mittel (18) zugeführt wird, die ein Förderelement (24) zum Befördern von Futter zu dem Mischbehälter aufweisen, wobei das Förderelement einen Abschnitt (30) aufweist, der sich unter der/den Entladeseite/n (12) der/den Förderbahn/en erstreckt.

22. Ein Verfahren gemäß Anspruch 21, wobei ein Schnitt Futter gemäß einem Schneide-Pfad abgetrennt wird, so dass der verbleibenden Teil des Ballens (3), der der Entladeseite zugewandt ist, relativ zu der Senkrechten nach hinten geneigt ist.

23. Ein Verfahren gemäß Anspruch 21 oder 22, wobei ein Schnitt Futter gemäß einem Schneide-Pfad abgetrennt wird, so dass der verbleibende Teil des Ballens (3), der der Entladeseite (12) zugewandt ist, an der oberen Seite schmaler als an der unteren Seite ist.

24. Ein Verfahren gemäß Anspruch 21, 22 oder 23, wobei der Teil des Ballens (3), der übrigbleibt, nachdem der Schnitt Futter davon abgetrennt wurde, von der Entladeseite in Richtung zu der Einlassseite bewegt wird.

## Revendications

1. Dispositif pour séparer et mélanger des aliments pour le bétail, comprenant au moins une unité (1) pour traiter les aliments, laquelle unité comprend une allée de transport (2) pour recevoir une ou plusieurs balles (3) d'aliments, laquelle allée de transport comprend des moyens de transport (5) pour transporter la ou les balles d'aliments reçues d'un côté d'entrée vers un côté de décharge, et des moyens de séparation pour séparer les aliments d'une balle qui a été transportée vers le côté de décharge, ledit dispositif comprenant en outre une trémie de mélange (26) pour mélanger les composants d'aliments en un mélange d'aliments et une unité de décharge (18) pour délivrer les aliments séparés à la trémie de mélange, dans lequel l'élément de séparation est configuré comme une unité de coupe agencée pour séparer une tranche d'aliments de l'extrémité orientée vers le côté de décharge de la balle qui est présente du côté de décharge, **caractérisé en ce que** l'unité de décharge (18) pour délivrer les aliments séparés à la trémie de mélange comprend un élément de transport (24) pour transporter les aliments vers la trémie de mélange, ledit élément de transport comprenant une partie (30) qui s'étend sous le ou les côtés de décharge (12) de la ou des allées de transport.

2. Dispositif selon la revendication 1, dans lequel l'élément de transport (24) et/ou la trémie de mélange (26) sont pourvus de moyens de pesage pour peser la quantité d'aliments dans l'unité de décharge (18) et/ou la trémie de mélange.

3. Dispositif selon la revendication 1 ou 2, dans lequel l'unité de coupe (17) est agencée pour suivre un trajet de coupe de sorte que le côté d'extrémité orienté vers le côté de décharge de la partie restante de la balle (3) soit incliné vers l'arrière par rapport à la verticale.

4. Dispositif selon la revendication 1, 2 ou 3, dans lequel l'unité de coupe (17) est agencée pour séparer une tranche d'aliments selon un trajet de coupe de sorte que la partie restante de la balle (3) soit plus étroite du côté supérieur que du côté inférieur.

5. Dispositif selon l'une quelconque des revendications précédentes, comprenant deux unités (1) ou plus pour traiter les aliments, dans lequel les allées de transport (2) des diverses unités sont agencées côte à côte, et dans lequel l'unité de coupe (17) peut être déplacée transversalement aux allées de transport vers des positions de fonctionnement qui sont alignées avec les allées de transport respectives.

6. Dispositif selon l'une quelconque des revendications précédentes, dans lequel l'unité de coupe (17) peut être déplacée dans la direction longitudinale des allées de transport.

7. Dispositif selon l'une quelconque des revendications précédentes, dans lequel l'unité de coupe (17) est pourvue de moyens de décharge (38) pour décharger les aliments séparés de l'unité de coupe.

8. Dispositif selon l'une quelconque des revendications précédentes, dans lequel l'unité de coupe (17) comprend un cadre (20) le long duquel l'unité de coupe peut se déplacer vers le haut et vers le bas selon la ligne de coupe inclinée.

9. Dispositif selon l'une quelconque des revendications précédentes, dans lequel l'unité de coupe (17) fait partie de l'unité de décharge (18) et dans lequel un guide transversal (19) est prévu du côté de décharge de toutes les allées de transport (2), auquel l'unité de décharge (18) est suspendue de manière à pouvoir être déplacée transversalement aux allées de transport.

10. Dispositif selon la revendication 9, dans lequel la trémie de mélange (26) est pourvue d'un élément d'entraînement et la trémie de mélange peut être accouplée à l'unité de décharge (18) pour déplacer l'unité de décharge par rapport aux allées de transport.

11. Dispositif selon la revendication 9 ou 10, dans lequel l'élément de transport (24) fait partie de l'unité de décharge.

12. Dispositif selon la revendication 9, dans lequel la trémie de mélange est pourvue d'un godet de chargement (33) pour recevoir les aliments et délivrer lesdits aliments à la trémie de mélange.

13. Dispositif selon l'une quelconque des revendications précédentes, dans lequel la/chaque allée de transport comprend un fond (9), au moins une chaîne de transporteur sans fin (5), qui est guidée dans une gouttière (8) formée dans le fond entre des roues dentées de retour (6, 7) disposées du côté d'entrée et du côté de décharge, respectivement, dans lequel des supports (10) s'étendant transversalement à la direction de transport sont reliés à la ou aux chaînes de transport, lesquels supports sont guidés sur le fond.

14. Dispositif selon la revendication 13, dans lequel une fente transversale (32) est formée dans le fond du transporteur, à proximité du côté de décharge, dans laquelle fente le couteau (22) de l'unité de coupe peut s'étendre.

15. Dispositif selon l'une quelconque des revendications 9 à 14, dans lequel les allées de transport (2) sont délimitées par des panneaux (4) de chaque côté, et dans lequel l'unité de décharge (18) est pourvue de panneaux latéraux (31), l'espacement entre les panneaux latéraux étant au moins égal à l'espacement entre les panneaux du transporteur le plus large.

16. Dispositif selon la revendication 15, dans lequel un panneau (4) qui peut être déplacé transversalement à la direction de transport pour serrer une balle d'aliments entre les panneaux qui délimitent l'allée de transport (2) en question est prévu du côté de décharge d'une ou de plusieurs allées de transport.

17. Dispositif selon l'une quelconque des revendications précédentes, dans lequel la direction d'alimentation du côté d'entrée de la/chaque allée de transport (2) s'étend transversalement à la direction de transport.

18. Dispositif selon l'une quelconque des revendications 1 à 16, dans lequel la direction d'alimentation du côté d'entrée de la/chaque allée de transport (2) correspond à la direction de transport.

19. Dispositif selon l'une quelconque des revendications précédentes, dans lequel au moins une partie de la/chaque allée de transport (2) est inclinée, le côté de décharge étant positionné plus haut que le côté d'entrée.

20. Dispositif selon l'une quelconque des revendications précédentes, dans lequel l'unité de coupe (17) comprend un couteau de coupe comprenant deux lames pouvant être déplacées en va-et-vient.

21. Procédé pour séparer et mélanger des aliments pour le bétail, dans lequel une ou plusieurs balles (3) d'aliments sont placées sur une ou plusieurs allées de transport (2), la ou les balles placées sur la ou les allées de transport sont transportées d'un côté d'entrée vers un côté de décharge, et les aliments sont séparés d'une balle qui a été transportée vers le côté de décharge, lesquels aliments séparés sont mélangés en un mélange d'aliments dans une trémie de mélange (26), dans lequel une tranche d'aliments est séparée de l'extrémité orientée vers le côté de décharge de la balle qui est présente du côté de décharge, **caractérisé en ce que** les aliments séparés sont délivrés à la trémie de mélange (26) par des moyens (18) comprenant un élément de transport (24) pour transporter les aliments vers la trémie de mélange, ledit élément de transport comprenant une partie (30) qui s'étend sous le ou les côtés de décharge (12) de la ou des allées de transport.

22. Procédé selon la revendication 21, dans lequel une tranche d'aliments est séparée selon un trajet de coupe de sorte que la partie restante de la balle (3) orientée vers le côté de décharge (12) soit inclinée vers l'arrière par rapport à la verticale.

23. Procédé selon la revendication 21 ou 22, dans lequel une tranche d'aliments est séparée selon un trajet de coupe de sorte que la partie restante de la balle (3) orientée vers le côté de décharge (12) soit plus étroite du côté supérieur que du côté inférieur.

24. Procédé selon la revendication 21, 22 ou 23, dans lequel la partie de la balle (3) qui reste après que la tranche d'aliments a été séparée de celle-ci est déplacée du côté de décharge vers le côté d'entrée.
